# EUROPÄISCHE PATENTSCHRIFT

(11) **EP 0 408 051 B1**
(45) Veröffentlichungstag und Bekanntmachung des Hinweises auf die Patenterteilung: **09.06.1993**
(21) Anmeldenummer: 90113437.9
(22) Anmeldetag: 13.07.1990
(51) Int. Cl.: F04B 15/02, B05B 7/32, B05B 12/08, G05D 7/06

(54) **Verfahren und Vorrichtung zum Fördern von flüssigen oder pastösen Substanzen**
Method and device for the transport of fluid or pasty materials
Méthode et dispositif pour le transport de substances fluides ou pâteuses

(30) Priorität: 13.07.1989 DE 3923155; 15.11.1989 DE 3937900
(43) Veröffentlichungstag der Anmeldung: 16.01.1991
(73) Patentinhaber: Lenhardt Maschinenbau GmbH, D-75242 Neuhausen (DE)
(72) Erfinder: Lenhardt, Karl, D-7531 Neuhausen-Hamberg (DE)
(74) Vertreter: Twelmeier, Ulrich, Dipl.Phys.

(56) Entgegenhaltungen:
- DE-A- 3 542 767
- FR-A- 2 454 325
- GB-A- 1 211 114
- GB-A- 2 170 869
- US-A- 2 965 119
- US-A- 4 199 303
- US-A- 4 714 425

## Beschreibung

Die Erfindung geht aus von einem Verfahren mit den im Oberbegriff des Anspruchs 1 angegebenen Merkmalen. Ein solches Verfahren ist aus der DE-A-35 42 767 bekannt. Es dient insbesondere zum Fördern von Dicht- oder Klebstoffen aus einem Behälter zu einer Düse, mit welcher sie auf ein Werkstück aufgetragen werden. Dabei ist häufig eine hohe Dosiergenauigkeit verlangt. Die Dosiergenauigkeit der Zahnradpumpe ist um so besser, je gleichmässiger der Druck ist, mit dem sie beaufschlagt wird. In der aus der DE-A-35 42 767 bekannten Vorrichtung wird die Zahnradpumpe deshalb durch eine Kolbenpumpe gespeist, deren Kolben mit Hilfe eines Druckmittelzylinders mit einem gleichbleibenden Druck beaufschlagt wird. Eine ähnliche Vorrichtung, mit welcher der Vordruck einer Verdrängerpumpe auf einen konstanten Wert geregelt wird, ist aus der US-A-4,714,425 bekannt. Eine weitere Vorrichtung, in welcher die Verdrängerpumpe eine Zahnradpumpe ist, deren Vordruck mittels einer ihren Einlaß und Auslaß verbindenden By-pass-Leitung und mittels einer sie speisenden, steuerbaren Verdrängerpumpe auf einen konstanten, für den Einlaß und Auslaß gleichen Wert eingestellt wird, ist aus der US-A-2,965,119 bekannt.

Es hat sich jedoch gezeigt, dass die Dosiergenauigkeit um so schlechter ist, je niedriger die Zähigkeit der zu fördernden Substanz ist: je niedriger die Zähigkeit der Substanz ist, desto stärker wirkt sich ein vor der Zahnradpumpe entstehender Staudruck auf die Fördermenge der Zahnradpumpe aus und setzt deren Fördermenge herab. Von besonderer Bedeutung ist das beim Fördern von Dicht- und Klebstoffen, welche aus zwei Komponenten (Basiskomponente und Härter, oder eine selbsthärtende Komponente und eine die Härtung beschleunigende Komponente) bestehen, die erst unmittelbar vor ihrer Verarbeitung miteinander gemischt werden und dann abbinden, wobei sie chemisch miteinander reagieren. Hier kommt es darauf an, beide Komponenten in vorgegebenem Mengenverhältnis miteinander zu mischen. Der Härter und der Beschleuniger sind üblicherweise weniger zäh als die Basiskomponente, und wenn sie mit einer gattungsgemäßen Vorrichtung einem Mischer zugeführt werden, dann ist die Fördermenge des Härters bzw. Beschleunigers stärker abhängig vom Staudruck als die Fördermenge der Basiskomponente, so dass auch deren Mischungsverhältnis vom Staudruck abhängt.

Aus der DE-A-36 24 944 ist es bekannt, in einer mit einer Kolbenpumpe arbeitenden Dosiervorrichtung für Klebstoffe den Klebstoffdruck über einen Drucksensor zu erfassen und durch einen Regler den Vordruck des Kolbens der Kolbenpumpe so zu regeln, dass ein konstanter Klebstoffdruck erreicht wird. Eine solche Regelung auf einen konstanten Druck funktioniert bei einer Kolbenpumpe, die nach dem Verdrängungsprinzip arbeitet, sie versagt jedoch bei einer Zahnradpumpe. Sie versagt ferner in Fällen, in denen veränderliche Drücke unvermeidlich sind.

Der vorliegenden Erfindung liegt die Aufgabe zugrunde, eine Vorrichtung der eingangs genannten Art zu schaffen, welche nicht nur hochviskose, sondern auch weniger zähe Substanzen wie Härter und Beschleuniger, bei veränderlichem Staudruck nach der Zahnradpumpe mit höherer Dosiergenauigkeit, nämlich mit geringerer Abhängigkeit vom Staudruck, zu fördern gestattet.

Diese Aufgabe wird gelöst durch ein Verfahren mit den im Anspruch 1 angegebenen Merkmalen und durch eine Vorrichtung mit den im Anspruch 4 angegebenen Merkmalen. Vorteilhafte Weiterbildungen der Erfindung sind Gegenstand der Unteransprüche. Dadurch, dass man die Zahnradpumpe bei steigendem Staudruck mit einem höheren Vordruck beaufschlagt, wird der unerwünschten Tendenz des Staudrucks, die Förderleistung der Zahnradpumpe herabzusetzen, wirksam begegnet. Dies ist von besonderer Bedeutung, wenn sich im Förderweg Strömungshindernisse befinden, insbesondere eine Engstelle wie z.B. eine Düse, mit welcher die Substanz auf ein Werkstück aufgetragen wird, oder ein Mischer, in welchem die Substanz mit einer zweiten Substanz vermischt wird. Zwar kann man sich dann, wenn man mit der Zahnradpumpe immer nur ein und dieselbe Substanz bei ein und derselben Temperatur auf einem unveränderlichen Förderweg fördert, mit der Förderleistung auch ohne eine Steuerung des Vordrucks der Zahnradpumpe auf den gleichbleibend auftretenden Staudruck einstellen, wenn jedoch mit der Vorrichtung unterschiedliche Substanzen und/oder Substanzen mit unterschiedlichen Temperaturen über gleichbleibende oder variierende Förderwege in gleichbleibender Menge pro Zeiteinheit gefördert werden sollen, dann ermöglicht erst die erfindungsgemäße Nachführung des Vordruckes der Zahnradpumpe entsprechend dem sich ändernden Staudruck eine gleichmäßigere Förderleistung der Zahnradpumpe. Es handelt sich dabei nicht um eine Regelung, wie sie in der DE-OS 36 24 944 beschrieben ist, denn dort wird der Fördrdruck der den Klebstoff dosierenden Pumpe auf einen konstanten Wert geregelt, wohingegen bei der erfindungsgemäßen, mit einer Zahnradpumpe arbeitenden Vorrichtung der Förderdruck der Zahnradpumpe gerade nicht konstant ist, sondern durch unterschiedlich starke Stauung der geförderten Substanz variiert.

Den Vordruck der Zahnradpumpe kann man mit Vorteil dadurch entsprechend dem Staudruck nachführen, dass man den Staudruck durch einen Drucksensor misst und dessen Signal einem Steuergerät zuführt, welches seinerseits den Förderdruck der Pumpe anpasst, welche die Substanz aus dem Behälter fördert und in die Zahnradpumpe einspeist. Vorzugsweise hat das Steuergerät einen Speicher, in welchem für die jeweilige zu fördernde Substanz eine Kennlinie gespeichert ist, welche für eine konstante Förderleistung der Zahnradpumpe die Abhängigkeit des Vordrucks der Zahnradpumpe bzw. des Förderdruckes der sie speisenden Pumpe vom Staudruck in der von der Zahnradpumpe kommenden Förderleitung angibt. Diese Kennlinie kann für die jeweilige Vorrichtung und die jeweils zu fördernde Substanz für eine oder mehrere infrage kommende Temperaturen experimentell bestimmt, also aus Erfahrungswerten gewonnen werden; sie ist weitgehend nicht linear.

Eine andere, besonders vorteilhafte Möglichkeit, den Vordruck der Zahnradpumpe entsprechend dem Staudruck nachzuführen, besteht darin, im Förderweg zwischen der die Substanz aus dem Behälter fördernden Pumpe und der Zahnradpumpe eine zweite Zahnradpumpe vorzusehen, welche synchron mit der ersten Zahnradpumpe angetrieben ist. Diese Anordnung hat den Vorteil, dass sich mit zunehmendem Staudruck vor der ersten Zahnradpumpe automatisch auch zwischen den beiden Zahnradpumpen ein Druck aufbaut, der für die erste Zahnradpumpe einen erhöhten Vordruck darstellt und dadurch den nachteiligen Einfluß des Staudrucks auf die Förderleistung der ersten Zahnradpumpe teilweise ausgleicht. Zwar erreicht man dadurch keine vollständige Unabhängigkeit der Förderleistung der ersten Zahnradpumpe vom Staudruck in der von der ersten Zahnradpumpe ausgehenden Förderleitung, doch wird der Wert, den der Staudruck annehmen darf, ohne eine vorgegebene Förderleistung zu unterschreiten, durch die zweite Zahnradpumpe deutlich heraufgesetzt.

Verwendet man in der beschriebenen Weise eine Anordnung von zwei Zahnradpumpen hintereinander, dann sorgt man zweckmässigerweise dafür, dass die zweite Zahnradpumpe, welche die erste Zahnradpumpe speist, mit einem konstanten Vordruck beaufschlagt wird. Das erreicht man am leichtesten, wenn man die Pumpe, die die Substanz aus einem Behälter in die zweite Zahnradpumpe speist, als Kolbenpumpe ausbildet, deren Kolben mit einer passenden Kraft beaufschlagt werden kann.

Die Erfindung kann in entsprechender Weise angewendet werden auf die Anordnung von drei Zahnradpumpen hintereinander: Der vor der vordersten Zahnradpumpe herrschende Staudruck wirkt automatisch zurück auf den Druck zwischen der vordersten und der mittleren Zahnradpumpe und dieser Druck wirkt wiederum zurück auf den Druck zwischen der mittleren und der hinteren Zahnradpumpe, so dass bei einer Erhöhung des Staudrucks vor der vorderen Zahnradpumpe nicht nur der Vordruck der vorderen Zahnradpumpe, sondern auch der Vordruck der mittleren Zahnradpumpe erhöht wird. Das hat zur Folge, dass bei einer solchen Anordnung aus drei Zahnradpumpen hintereinander die Abhängigkeit der Förderleistung vom Staudruck vor der vorderen Zahnradpumpe noch geringer ist als bei einer Anordnung aus zwei Zahnradpumpen hintereinander.

### Beispiel I:

Eine Zahnradpumpe mit einer Förderleistung von 4,5 cm³ pro Umdrehung fördert bei einer Drehzahl von 60 Umdrehungen pro Minute von einer Substanz, deren Zähigkeit 385 mPa . s beträgt, bei einem Vordruck von 15 bar und bei einem Staudruck von 19 bar 0,26 l pro Minute, bei einem Staudruck von 98 bar jedoch nur noch 0,20 l pro Minute. Durch Einsatz einer gleichen, zweiten Zahnradpumpe, welche die erste Zahnradpumpe speist, sinkt die Förderleistung erst bei einem Staudruck von 125 bar auf 0,20 l pro Minute ab, wobei der Vordruck der ersten Zahnradpumpe bis dahin auf 45 bar angestiegen ist.

### Beispiel II:

Wenn man mit derselben Zahnradpumpe wie im 1. Beispiel eine Substanz mit einer Viskosität von 15 bis 20 Pa . s fördert, dann hat man bei einem Vordruck von 15 bar und einem Staudruck von 10 bar eine Förderleistung von 0,25 l pro Minute. Da die Substanz zäher ist, als die im 1. Beispiel geförderte Substanz, sinkt die Fördermenge erst bei einem Staudruck von 135 bar auf 0,20 l pro Minute ab. Durch Einsatz einer gleichen, zweiten Zahnradpumpe wird die Absenkung der Fördermenge auf 0,20 l pro Minute erst bei einem Staudruck von 150 bar erreicht, wobei der Vordruck der ersten Zahnradpumpe bis dahin auf 45 bar angestiegen ist.

Die Beispiele zeigen einerseits die Wirksamkeit der erfindungsgemäßen Maßnahme und andererseits ihre Bedeutung gerade für Substanzen mit geringerer Viskosität.

Die Pumpe, die die Substanz aus dem Behälter fördert, ist zweckmässigerweise eine Kolbenpumpe. Sie kann die ihr folgende Zahnradpumpe am leichtesten mit einem konstanten Vordruck versorgen und im Beispiel des Anspruchs 2 den Vordruck der Zahnradpumpe dem variierenden Staudruck anpassen. Der Zylinder der Kolbenpumpe ist sodann der Behälter, aus welchem die Zahnradpumpe gespeist wird; er kann seinerseits in üblicher Weise aus einem Faß, welches die Substanz enthält, mittels einer Faßpumpe nachgefüllt werden.

Besonders vorteilhaft ist die Verwendung der Vorrichtung zum Dosieren von Kleb- und Dichtstoffen, die aus zwei unterschiedlich zähen Komponenten bestehen, die in bestimmtem Verhältnis miteinander gemischt werden müssen. Hier kann man für die weniger zähe Substanz eine Zahnradpumpe verwenden, deren Vordruck erfindungsgemäß nachgeführt wird, während für die zähere Substanz eine dritte Zahnradpumpe verwendet wird, bei welcher eher auf eine Nachführung des Vordrucks verzichtet werden kann, weil beim Fördern zäherer Substanzen der Einfluß des Staudrucks auf die Dosiergenauigkeit geringer ist. Wenn man aber auch bei der für die zähere Substanz vorgesehenen dritten Zahnradpumpe den Vordruck in Abhängigkeit vom Staudruck nachführt, dann hat das den Vorteil, dass auch die zähere Substanz genauer dosiert und das Mischungsverhältnis der zäheren Substanz zu einer weniger zähen Substanz besser konstant gehalten werden kann.

Das Synchronisieren der Zahnradpumpen geschieht am einfachsten dadurch, dass man sie durch Getriebeelemente miteinander verbindet und durch einen gemeinsamen Motor antreibt; die Zahnradpumpen könnten aber auch durch elektrische Steuerung synchronisiert werden.

Beim Dosieren von aushärtenden Zweikomponentenklebern besteht das Problem, dass in Arbeitspausen die beiden miteinander vermischten Komponenten aushärten und den Förderweg verstopfen können. In Weiterbildung der Erfindung ist deshalb vorgesehen, dass sich im Förderweg einer der Komponenten, vorzugsweise der härtenden bzw. das Abbinden beschleunigenden Komponente, nach der ersten Zahnradpumpe - vor der Anschlußstelle des von der dritten Zahnradpumpe kommenden Förderweges für die andere Komponente - ein Umschaltventil befindet, welches in seiner einen Stellung den Ausgang der ersten Zahnradpumpe mit dem von der dritten Zahnradpumpe kommenden Förderweg und in seiner anderen Stellung den Ausgang der anderen Zahnradpumpe mit ihrem Eingang verbindet. Auf diese Weise kann man zu Beginn einer Arbeitspause das Umschaltventil umstellen und die Zahnradpumpen eine zeitlang weiterlaufen lassen. Das hat die Folge, dass eine der Komponenten (vorzugsweise der Härter oder Beschleuniger) im Kreislauf geführt und die andere Komponente weiter hin zur Düse geführt wird. Die Zahnradpumpen werden abgeschaltet, wenn aus der Düse nur noch die zweite Komponente, aber nicht mehr die Mischung der beiden Komponenten austritt.

Ein wichtiges Anwendungsgebiet für erfindungsgemäße Vorrichtungen ist das Versiegeln der Randfuge von Isolierglasscheiben, die durch Zwischenfügen eines rahmenförmigen, metallischen oder plastischen Abstandhalters miteinander verklebt sind. Zum Versiegeln der Isolierglasscheiben finden nämlich aushärtende Zweikomponentenkleber Verwendung, die in einer gleichbleibenden Zusammensetzung und mit einer vorgegebenen Genauigkeit dosiert werden müssen, wenn man fehlerlose, dauerhaft dichte Isolierglasscheiben erhalten will. Am verbreitetsten sind für diesen Zweck Polysulfide (Thiokole) und Polyurethane. Der apparative Aufwand, der bislang getrieben werden muss, um den Einfluss unterschiedlicher Vordrücke und variierender Viskositäten auf die Dosiergenauigkeit und die Zusammensetzung des Zweikomponentenklebers klein zu halten, ist beträchtlich. Die erfindungsgemäße Vorrichtung bringt hier einen großen Fortschritt: Die Dosiergenauigkeit und die Gleichmässigkeit der Zusammensetzung der Zweikomponentenkleber ist bei Drücken in den Förderleitungen, die im Einzelfall 300 bar überschreiten können, wesentlich besser als bei Vorrichtungen nach dem Stand der Technik. Die Viskosität der beiden Komponenten des Klebers ist im Betrieb praktisch ohne Einfluss auf die Dosiergenauigkeit. Für den Isolierglashersteller als Anwender ist das von unschätzbarem Wert, denn er kann ohne Bedenken Kleber von unterschiedlichen Herstellern und aus unterschiedlichen Chargen einsetzen, ohne die Mengendosierung umständlich neu einjustieren zu müssen, was bisher stets erforderlich war, die Isolierglashersteller aber häufig überforderte. Bei Verwendung der erfindungsgemäßen Vorrichtung treten diese Probleme nicht auf. Die für die Dosiergenauigkeit verantwortlichen Zahnradpumpen können sämtlich durch einen gemeinsamen Motor angetrieben werden. Das hat den Vorteil, dass die Mengendosierung, die in einer Isolierglasfertigungslinie laufend geändert werden können muss, sehr einfach geändert werden kann, weil nur die Leistung eines einzigen Motors geändert werden muss, bei vorgegebener Breite der Fuge einer Isolierglasscheibe im allgemeinen nur noch in Abhängigkeit von der Fugentiefe, die durch einen Sensor während des Versiegelungsvorganges laufend ermittelt werden kann. Weil die Dosierung so ausserordentlich genauer erfolgt und so viel leichter geändert werden kann als beim Stand der Technik, ist der apparative Aufwand für eine zum Versiegeln von Isolierglas vorgesehene erfindungsgemäße Vorrichtung größenordnungsmässig nur noch 1/3 des Aufwandes, der für eine weniger gute Versiegelung beim Stand der Technik erforderlich war.

Drei Ausführungsbeispiele der Erfindung sind in den beigefügten schematischen Zeichnungen dargestellt und werden nachfolgend beschrieben.
- Figur 1: zeigt eine Vorrichtung zum dosierten Abgeben eines aus zwei verschiedenen Substanzen bestehenden Gemisches, wobei für das Fördern der weniger zähen Substanz eine Anordnung aus zwei Zahnradpumpen vorgesehen ist,
- Figur 2: zeigt eine Vorrichtung für denselben Verwendungszweck wie in Figur 1, wobei für das Fördern der weniger zähen Substanz anstelle einer zweiten Zahnradpumpe ein Druckmesser und ein Steuergerät zur Nachführung des Vordrucks der Zahnradpumpe vorgesehen sind, und
- Figur 3: zeigt eine Vorrichtung für denselben Verwendungszweck wie in Figur 1, wobei für beide Substanzen jeweils eine Anordnung aus zwei Zahnradpumpen vorgesehen ist.

In den drei Figuren sind gleiche oder einander entsprechende Teile mit übereinstimmenden Bezugszahlen bezeichnet.

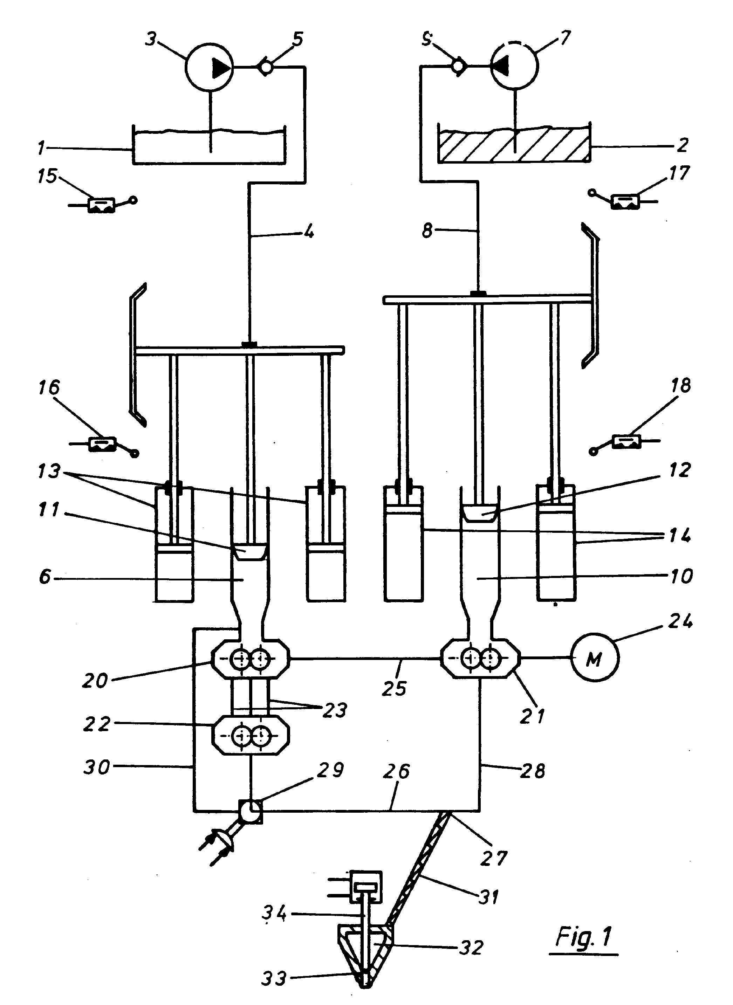

Figur 1 zeigt zwei Vorratsbehälter 1 und 2 für zwei verschiedene Substanzen, bei denen es sich beispielsweise um die beiden Komponenten eines Zweikomponentenklebstoffes (Basiskomponente und Härter) oder um einen an Luft härtenden Klebstoff als Basiskomponente und einen Beschleuniger als Zusatzkomponente handeln kann. Die Vorratsbehälter sind bevorzugt Fässer. Im folgenden sei angenommen, dass das Faß 1 die weniger zähe Substanz (Härter bzw. Beschleuniger) und das Faß 2 die zähere Substanz (Basiskomponente) enthalte. Die Substanz aus dem Faß 1 wird durch eine Faßpumpe 3 durch eine Förderleitung 4, in welcher ein Rückschlagventil 5 liegt, in einen Zwischenspeicher 6 gefördert. Entsprechend wird die Substanz aus dem Faß 2 durch eine Faßpumpe 7 durch eine Förderleitung 8, in welcher ein Rückschlagventil 9 liegt, in einen Zwischenspeicher 10 gefördert. Bei den Zwischenspeichern 6 und 10 handelt es sich um Kolbenpumpen, deren Kolben 11 bzw. 12 durch je zwei Druckmittelzylinder 13 bzw. 14 betätigt werden. Die Lage der Kolben 11 und 12 wird durch Endschalter 15, 16, 17 und 18 überwacht. Gelangt der Kolben 11 in seine vordere Endstellung, in welcher der Endschalter 16 anspricht, dann wird die Faßpumpe 3 eingeschaltet und füllt den Zylinder 6, bis der Kolben 11 seine hintere Endstellung erreicht, in welcher der Endschalter 15 anspricht und die Faßpumpe 3 abschaltet. Entsprechend wird dann, wenn der Kolben 12 seine vordere Endstellung erreicht, in der der Endschalter 18 anspricht, die Faßpumpe 7 eingeschaltet und füllt den Zylinder 10 nach, bis der Kolben 12 seine hintere Endstellung erreicht, in der der Endschalter 17 anspricht und die Faßpumpe 7 abschaltet. Während-dessen stehen die Kolben 11 und 12 jeweils unter einem individuellen, gleichbleibenden Druck, so dass ihnen nachgeordnete Zahnradpumpen 20 und 21 stets mit einem entsprechenden Vordruck beaufschlagt werden.

Die Förderleistung der Kolbenpumpen 6, 10 und Zahnradpumpen 20, 21 ist so aufeinander abgestimmt, dass die beiden Substanzen in vorgegebenem Mengenverhältnis gefördert werden können. Um das auch für die weniger zähe Substanz bei unterschiedlichen Staudrücken gewährleisten zu können, ist für diese Substanz eine Anordnung aus zwei hintereinander angeordneten und synchron angetriebenen Zahnradpumpen 20 und 22 vorgesehen, von denen die vordere als erste Zahnradpumpe 22 und die hintere als zweite Zahnradpumpe 20 bezeichnet wird. Die Synchronisierung kann beispielsweise durch eine Kette 23 erfolgen. Die erste und die zweite Zahnradpumpe 22 bzw. 20 sind vorzugsweise baugleich. Alle drei Zahnradpumpen 20, 21, 22 werden gemeinsam durch einen Motor 24 angetrieben, welcher direkt die dritte Zahnradpumpe 21 antreibt. Von der dritten Zahnradpumpe 21 führt zur zweiten Zahnradpumpe 20 eine Welle 25. Im Förderweg 26 von der ersten Zahnradpumpe 22 zur Anschlußstelle des von der dritten Zahnradpumpe 21 kommenden Förderweges 28 befindet sich ein Umschaltventil 29, welches in seiner einen Stellung den Ausgang der ersten Zahnradpumpe 22 mit dem Förderweg 28 verbindet und in seiner anderen Stellung den Ausgang der ersten Zahnradpumpe 22 über eine Rückleitung 30 mit dem Eingang der zweiten Zahnradpumpe 20 verbindet.

Der Anschlußpunkt 27 befindet sich zugleich am Eingang eines statischen Mischers 31, in welchem die beiden Substanzen miteinander gemischt und dann in einen Düsenkopf 32 eingeleitet werden, dessen Düse 33 durch ein Nadelventil 34 verschließbar ist.

In Betriebspausen stellt man das Umschaltventil 29 in seine Stellung, in welcher der Förderweg 26 zur Düse 33 blockiert ist, so dass die Substanz durch die Rückleitung 30 zurück und im Kreislauf geführt wird. Man läßt den Motor 24 dann solange laufen, bis aus der Düse 33 nur noch die aus dem Faß 2 stammende Substanz austritt. Danach ist ein Aushärten der Substanzen in den Leitungen nicht mehr zu befürchten.

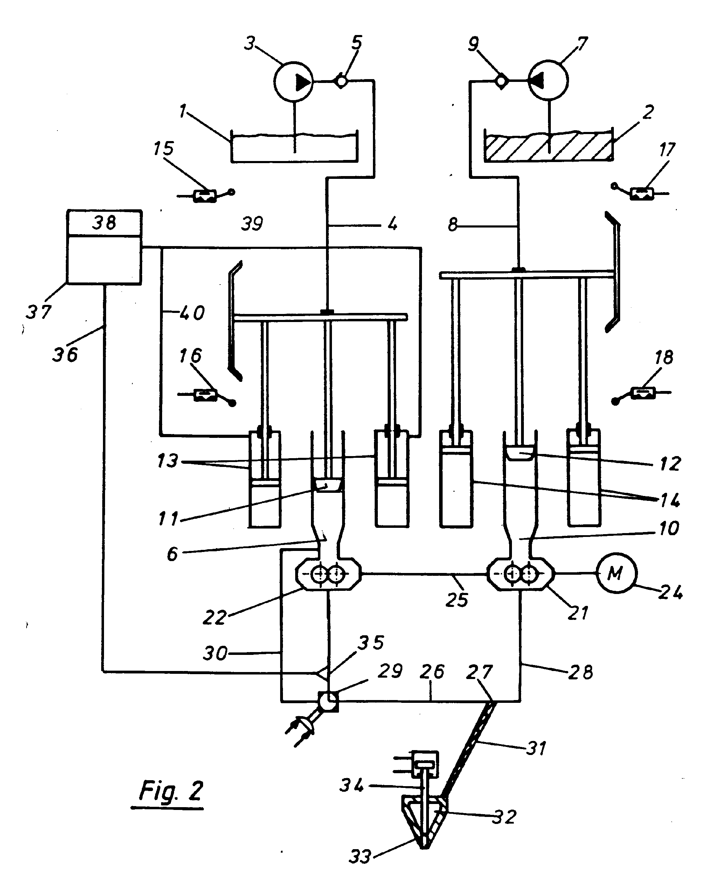

Das Ausführungsbeispiel gemäß Figur 2 unterscheidet sich von dem in Figur 1 darin, dass anstelle der zweiten Zahnradpumpe 20 in dem von der ersten Zahnradpumpe 22 kommenden Förderweg 26 ein Drucksensor 35 liegt, welcher den Staudruck aufnimmt und über eine Leitung 36 einem Steuergerät 37 mitteilt, welches über Steuerleitungen 39 und 40 in Abhängigkeit von dem gemessenen Staudruck den Förderdruck der Kolbenpumpe 6 nachführt, und zwar nach einer Kennlinie, die nach Erfahrungswerten gewonnen und in einem Speicher 38 des Steuergerätes 37 gespeichert ist und für eine gleichbleibende Förderleistung der Zahnradpumpe 22 die Abhängigkeit des Förderdrucks der Kolbenpumpe 6 vom Staudruck in der leitung 26 angibt.

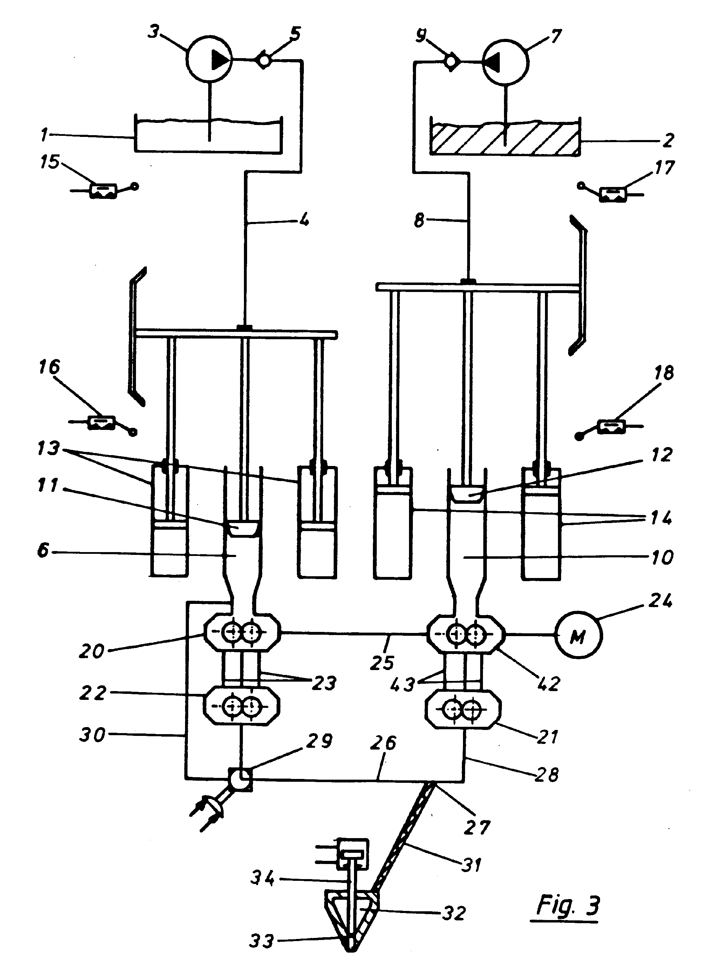

Das Ausführungsbeispiel gemäß Figur 3 unterscheidet sich von dem in Figur 1 darin, dass auch im Förderweg 28 eine Anordnung von zwei Zahnradpumpen 21 und 42 vorgesehen ist, die ebenso wie die beiden Zahnradpumpen 20 und 22 durch mechanische Getriebeelemente 43, insbesondere durch Ketten, miteinander synchronisiert sind. Auf diese Weise werden beide Substanzen genauer dosiert und ihr Mischungsverhältnis ist konstanter als im Ausführungsbeispiel gemäß Figur 1.

## Patentansprüche

1. Verfahren zum Fördern von pastösen Substanzen mit einer Zahnradpumpe, welcher die Substanz mit einem Vordruck zugeführt wird, **dadurch** **gekennzeichnet**, dass der Vordruck der Zahnradpumpe (21, 22) mit steigendem Staudruck in dem von der Zahnradpumpe (21, 22) ausgehenden Förderweg (26, 28) erhöht wird.

2. Verfahren nach Anspruch 1, **dadurch gekennzeichnet**, dass der Vordruck der Zahnradpumpe (22, 21) mit einer sie speisenden Pumpe (6, 20, 42) erzeugt wird.

3. Verfahren nach Anspruch 2, **dadurch gekennzeichnet**, dass der Vordruck der Zahnradpumpe (21, 22) durch eine zweite Zahnradpumpe (20, 42) erzeugt wird.

4. Verfahren nach Anspruch 3, **dadurch gekennzeichnet**, dass die zweite Zahnradpumpe (20, 42) durch eine weitere Pumpe (6, 10) gespeist und durch sie mit einem konstanten Vordruck beaufschlagt wird.

5. Verfahren nach Anspruch 2, **dadurch gekennzeichnet**, dass der Staudruck in dem von der Zahnradpumpe (22) ausgehenden Förderweg (26, 28) gemessen und der Förderdruck der die Zahnradpumpe (22) speisenden Pumpe (6) erhöht wird, wenn der gemessene Staudruck steigt.

6. Vorrichtung zum Fördern von pastösen Substanzen zur Durchführung des Verfahrens nach Anspruch 3 oder 4 mit einer Zahnradpumpe (21, 22) und mit einer sie mit einem Vordruck speisenden Pumpe (20, 42), **dadurch** **gekennzeichnet**, dass die die Zahnradpumpe (21, 22) speisenden Pumpe (20, 42) eine zweite Zahnradpumpe ist, die synchron mit der ersten Zahnradpumpe (20, 21) angetrieben ist und ihrerseits durch eine weitere Pumpe (6, 10) aus einem Behälter gespeist wird.

7. Vorrichtung nach Anspruch 6, **dadurch gekennzeichnet,** dass die beiden Zahnradpumpen (20, 22) im wesentlichen baugleich sind.

8. Vorrichtung zum Fördern von pastösen Substanzen zur Durchführung des Verfahrens nach Anspruch 5 mit einer Zahnradpumpe (22) und mit einer sie mit einem Vordruck aus einem Behälter speisenden Pumpe (6), **dadurch** **gekennzeichnet**, dass in dem von der Zahnradpumpe (22) ausgehenden Förderweg (26) ein Drucksensor (35) vorgesehen ist, der mit dem Signal-eingang eines Steuergerätes (37) verbunden ist, welches den Förderdruck der die Zahnradpumpe (22) speisenden Pumpe (6) mit steigendem, vom Drucksensor (35) gemeldeten Druck erhöht.

9. Vorrichtung nach Anspruch 8, **dadurch** **gekennzeichnet**, dass das Steuergerät (37) einen Speicher (38) enthält, in welchem für die betreffende Substanz eine aus Erfahrungswerten gewonnene Kennlinie gespeichert ist, die angibt, wie bei konstanter Förderleistung der Zahnradpumpe (22) deren Vordruck vom Staudruck in dem von der Zahnradpumpe (22) ausgehenden Förderweg (26) abhängt.

10. Vorrichtung nach einem der Ansprüche 6 bis 9, **dadurch gekennzeichnet**, dass die weitere Pumpe (6, 10) eine Kolbenpumpe ist.

11. Vorrichtung nach einem der Ansprüche 6 bis 10, **dadurch** **gekennzeichnet**, dass zum Fördern einer zweiten Substanz, welche zäher ist als die erste Substanz, in vorgegebenem Mengenverhältnis zur ersten Substanz
für die zweite Substanz aufeinanderfolgend
- ein zweiter Behälter,
- eine gesonderte Pumpe (10) zum Fördern der zweiten Substanz aus dem zweiten Behälter,
- und eine gesonderte Zahnradpumpe (21) (nachfolgend als dritte Zahnradpumpe bezeichnet
vorgesehen sind, wobei die dritte Zahnradpumpe (21) mit der ersten Zahnradpumpe (22) synchronisiert ist.

12. Vorrichtung nach Anspruch 10, **dadurch** **gekennzeichnet**, dass auch der dritten Zahnradpumpe (21) eine sie speisende Pumpe, insbesondere eine vierte Zahnradpumpe (42), vorgeschaltet ist, die den Vordruck der dritten Zahnradpumpe (21) mit steigendem Staudruck in dem von der dritten Zahnradpumpe (21) ausgehenden Förderweg (28) erhöht.

13. Vorrichtung nach einem der Ansprüche 6, 7, 11 und 12, **dadurch** **gekennzeichnet**, dass die Zahnradpumpen (20, 21, 22, 42) durch Getriebeelemente (23, 25, 43) miteinander verbunden und durch einen gemeinsamen Motor (24) angetrieben sind.

14. Vorrichtung nach einem der vorstehenden Ansprüche, **dadurch** **gekennzeichnet**, dass sich im Förderweg hinter der Zahnradpumpe (21, 22) ein Strömungshindernis, insbesondere eine Düse (33) oder dergleichen Engstelle und/oder ein Mischer (31) befindet.

15. Vorrichtung nach Anspruch 11 und 14, **dadurch** **gekennzeichnet**, dass die Düse (33) durch die erste und zugleich durch die dritte Zahnradpumpe (22, 21) gespeist wird.

16. Vorrichtung nach Anspruch 15, **dadurch** **gekennzeichnet**, dass sich in dem von der ersten Zahnradpumpe (22) ausgehenden Förderweg (26) vor der Anschlußstelle (27) des von der dritten Zahnradpumpe (21) kommenden Förderweges (28) ein Umschaltventil (29) (z.B. ein 3/2-Wegeventil) befindet, welches in seiner einen Stellung den Ausgang der ersten Zahnradpumpe (22) mit dem von der dritten Zahnradpumpe (21) kommenden Förderweg (28) und in seiner anderen Stellung den Ausgang der ersten Zahnradpumpe (22) mit ihrem Eingang oder mit dem Eingang der zweiten Zahnradpumpe (20) verbindet.

## Claims

1. A process of handling pasty substances, comprising a gear pump, which is fed wtih the substance under a feed pressure, characterized in that the feed pressure of the gear pump (21, 22) is increased as the dynamic pressure increases in the delivery oath (26, 28) extending from the gear pump (21, 22).

2. A process according to claim 1, characterized in that the feed pressure of the gear pump (22, 21) is generated by a pump (5, 20, 42) for feeding the gear pump.

3. A process according to claim 2, characterized in that the feed pressure of the gear pump (21, 22) is generated by a second gear pump (20, 42).

4. A process according to claim 3, characterized in that the second gear pump (20, 42) is fed by an additional pump (6, 10), by which a constant feed pressure is applied to the second gear pump (20, 42).

5. A process according to claim 2, characterized in that the dynamic pressure in the delivery path (26, 28) extending from the gear pump (22) is measured and the discharge pressure of the pump (6) for feeding the gear pump (22) is increased when the measured dynamic pressure is rising.

6. An apparatus for handling pasty substances for carrying out the process according to claim 3 or 4, comprising a gear pump (21,22) and a pump (20, 42) for feeding the gear pump under a feed pressure, characterized in that the pump (20, 42) far feeding the gear pump (21, 22) is a second gear pump, which is driven in synchronism with the synchronism with the first gear pump (20, 21) and is fed from a container by a further pump (6, 10).

7. An apparatus according to claim 6, characterized in that the two gear pumps (20, 22) have substantially the same design.

8. An apparatus for handling pasty substances for carrying out the process according to claim 5, comprising a gear pump (22) and a pump (6) for feeding the gear pump under a feed pressure from a container, characterized in that a pressure sensor (35) is provided in the delivery path (26) extending from the gear pump (22) and is connected to the signal input of a controller (37), which the discharge pressure of the pump (6) for feeding the gear pump (22) is increased in response to a rise of the pressure indicated by the pressure sensor (35).

9. An apparatus according to claim 8, characterized in that the controller (37) comprises a memory (38), in which a characteristic curve is stored, which has been determined for the substance concerned from empirical values and which indicates the dependence of the feed pressure of the gear pump (22) on the dynamic pressure in the delivery path (26) extending from the gear pump (22) during an operation of the gear pump (22) at a constant discharge rate of the gear pump (22).

10. An apparatus according to any of claims 6 to 9, characterized in that the further pump (6, 10) is a piston pump.

11. An apparatus according to any of claims 6 to 10, characterized in that for the handling of a second substance, which has a higher viscosity than the first substance, in a predetermined quantitative proportion to the first substance,
- a second container,
- a second pump (10) for delivering the second substance from the second container,
- and a second gear pump (21) (hereinafter called the third gear pump)
for the second substance are consecutively arranged and the third gear pump (21) is synchronized with the first gear pump (22).

12. An apparatus according to claim 10, characterized in that the third gear pump (21) is also preceded by a pump which serves to feed the third gear pump and particularly consists of a fourth gear pump (42), which increases the feed pressure of the third gear pump (21) as the dynamic pressure increases in the delivery path (28) extending from the third gear pump (21).

13. An apparatus according to any of claims 6, 7, 11, and 12, characterized in that the gear pumps (20, 21, 22, 42) are interconnected by gearing elements (23, 25, 43) and are driven by a common motor (24).

14. An apparatus according to any of the preceding claims, characterized in that a flow-restricting obstacle, particularly a nozzle (33) or the like constriction, and/or a mixer (31) is provided in the delivery path behind the gear pump (21, 22).

15. An apparatus according to claims 11 and 14, characterized in that the nozzle (33) is fed by the first gear pump and simultaneously by the third gear pump (22,21).

16. An apparatus according to claim 15, characterized in that the delivery path (26) extending from the first gear pump (22) contains a directional valve (29) (e.g., a 3/2-way valve), which is disposed upstream of the junction (27) connected to the delivery path (28) coming from the third gear pump (21) and which in one position connects the outlet of the first gear pump (22) to the delivery path (28) coming from the third gear pump (21) and in its other position connects the outlet of the first gear pump (22) to its inlet or to the inlet of the second gear pump (20).

## Revendications

1. Procédé pour refouler des substances pâteuses au moyen d'une pompe à engrenages à laquelle ladite substance est amenée sous une pression initiale, caractérisé en ce que la pression initiale à l'arrivée de la pompe à engrenages (21, 22) augmente à mesure que croît la pression dynamique sur le trajet de refoulement (26, 28) partant de ladite pompe à engrenages (21, 22).

2. Procédé selon la revendication 1, caractérisé en ce que la pression initiale de la pompe à engregnages (22, 21) est générée par une pompe (6, 20, 42) qui alimente la pompe (22, 21).

3. Procédé selon la revendication 2, caractérisé en ce que la pression initiale de la pompe à engrenages (21, 22) est générée par une deuxième pompe à engrenages (20, 42).

4. Procédé selon la revendication 3, caractérisé en ce que la deuxième pompe à engrenages (20, 42) est alimentée par une autre pompe (6, 10) et placée sous une pression initiale constante par cette dernière.

5. Procédé selon la revendication 2, caractérisé en ce que la pression dynamique sur le trajet de refoulement (26, 28) partant de la pompe à engrenages (22) est mesurée et que la pression dynamique de la pompe (6) alimentant la pompe à engrenages (22) augmente si la pression dynamique mesurée croît.

6. Dispositif pour refouler des substances pâteuses par la mise en oeuvre du procédé selon les revendications 3 ou 4 au moyen d'une pompe à engrenages (21, 22) et d'une pompe (20, 42) alimentant la première sous une pression initiale, caractérisé en ce que la pompe (20, 42) qui alimente la pompe à engrenages (21, 22) est une deuxième pompe à engrenages qui est entraînée de manière synchrone avec la première pompe à engrenages (20, 21) et qui, pour sa part, est alimentée par une autre pompe (6, 10) à partir d'un réservoir.

7. Dispositif selon la revendication 6, caractérisé en ce que les deux pompes à engrenages (20, 22) sont construites de manière sensiblement identiques.

8. Dispositif pour le refoulement de substances pâteuses pour la mise en oeuvre du procédé selon la revendication 5, comportant une pompe à engrenages (22) et une pompe (6) alimentant la première sous une pression initiale à partir d'un réservoir, caractérisé en ce que, sur le trajet de refoulement (26) partant de la pompe à engrenages (22,) est prévu un capteur manométrique (35) qui est relié à l'entrée d'un signal venant d'un appareil de commande (37) lequel augmente la pression de refoulement de la pompe (6) alimentant la pompe à engrenages (22) à mesure que croît la pression signalée par le capteur manométrique (35).

9. Dispositif selon la revendication 8, caractérisé en ce que l'appareil de commande (37) contient une mémoire (38) dans laquelle est mémorisée la courbe caractéristique basée sur des valeurs d'expériences concernant la substance en question, courbe qui indique dans quelle mesure, à puissance de refoulement constante de la pompe à engrenages (22), sa pression initiale est fonction de la pression dynamique qui règne sur le trajet du refoulement (26) partant de ladite pompe à engrenages (22).

10. Dispositif selon l'une des revendications 6 à 9, caractérisé en ce que l'autre pompe (6, 10) est une pompe à piston.

11. Dispositif selon l'une des revendications 6 à 10, caractérisé en ce que, pour le refoulement d'une deuxième substance plus visqueuse que la première et dont le rapport quantitatif avec la première substance est prédéterminé, sont prévus, successivement, pour la deuxième substance :
- un deuxième réservoir,
- une pompe distincte (10) pour le refoulement de la deuxième substance à partir du deuxième réservoir,
- une pompe à engrenages distincte (21) (désignée ci-après troisième pompe à engrenage)
ladite troisième pompe à engrenages (21) étant synchronisée avec la première pompe à engrenages (22).

12. Dispositif selon la revendication 10, caractérisé en ce que, en amont de la troisième pompe à engrenages 21, est également montée une pompe qui l'alimente, en particulier une quatrième pompe à engrenages (42) laquelle augmente la pression initiale de la troisième pompe à engrenages (21) à mesure que croît la pression dynamique qui règne dans le trajet de refoulement (28) partant de la troisième pompe à engrenages (21).

13. Dispositif selon l'une des revendications 6, 7, 11 et 12, caractérisé en ce que les pompes à engrenages (20, 21, 22, 42) sont reliées les unes aux autres par des éléments d'engrenage (23, 25, 43) et qu'elles sont entraînées par un moteur commun (24).

14. Dispositif selon l'une des revendications précédentes, caractérisé en ce que, sur le trajet de refoulement, en aval de la pompe à engrenages (21, 22), se trouve un élément faisant obstacle à l'écoulement, en particulier une buse (33) ou un rétrécissement similaire et/ou un mélangeur (31).

15. Dispositif selon les revendications 11 et 14, caractérisé en ce que la buse (33) est alimentée par la première et simultanément par la troisième pompes à engrenages (22, 21).

16. Dispositif selon la revendication 15, caractérisé en ce que, sur le trajet de refoulement (26) partant de la première pompe à engrenages (22) se trouve, en amont du point de raccordement (27) du trajet de refoulement (28) venant de la troisième pompe à engrenages (21), une soupape directionnelle (29) (par exemple une soupape à 3/2 voies), laquelle dans l'une de ses positions relie la sortie de la première pompe à engrenages (22) au trajet de refoulement (28) venant de la troisième pompe à engrenages (21) et dans son'autre position relie la sortie de la première pompe à engrenages (22) à son entrée ou à l'entrée de la deuxième pompe à engrenages (20).
